# EUROPÄISCHE PATENTANMELDUNG

(11) **EP 3 503 244 A1**
(43) Veröffentlichungstag der Anmeldung: **26.06.2019**
(21) Anmeldenummer: 17208347.9
(22) Anmeldetag: 19.12.2017
(51) Int. Cl.: H01M 2/10, H01M 10/653, H01M 10/643, H01M 10/617, H01M 10/6235, H01M 10/613

(54) **AKKUPACK FÜR EINE HANDWERKZEUGMASCHINE**

(71) Anmelder: Hilti Aktiengesellschaft, 9494 Schaan (LI)
(72) Erfinder: Stanger, Robert, 87600 Kaufbeuren (DE); Hunger, Markus, 86161 Augsburg (DE)
(74) Vertreter: Hilti Aktiengesellschaft Corporate Intellectual Property

(57) **Zusammenfassung**

Akkupack für eine elektrische Handwerkzeugmaschine, wobei der Akkupack ein Gehäuse mit einer Mehrzahl von vorzugsweise zylindrischen Akkuzellen aufweist, wobei die Akkuzellen zwecks Wärmeabfuhr zumindest abschnittweise von einem wärmeleitenden Vergussmaterial umgeben sind.

## Beschreibung

Die vorliegende Erfindung betrifft ein Akkupack für eine elektrische Handwerkzeugmaschine, wobei der Akkupack ein Gehäuse mit einer Mehrzahl von vorzugsweise zylindrischen Akkuzellen aufweist.

Solch ein Akkupack ist beispielsweise aus der DE 10 2013 218 527 A1 bekannt. Zwecks Wärmeabfuhr stehen die Akkuzellen dieses Akkupacks über ein Aluminiumelement thermisch in Verbindung.

Es ist Aufgabe der vorliegenden Erfindung, einen alternativen Akkupack für eine Handwerkzeugmaschine bereitzustellen, insbesondere einen solchen, der eine erhöhte Lebensdauer der Akkuzellen begünstigt.

Die Aufgabe wird dadurch gelöst, dass die Akkuzellen zwecks Wärmeabfuhr zumindest abschnittsweise von einem wärmeleitenden Vergussmaterial umgeben sind.

Die Erfindung schließt die Erkenntnis ein, dass aus dem Stand der Technik bekannte Akkupacks mit Wärmeableitelementen, insbesondere mit solchen aus Aluminium, aufwendig in der Montage und teuer in der Herstellung sind. Weiterhin wurde bei solchen Akkupacks eine vergleichsweise schlechte Wärmeübertragung von den Akkuzellen hin zum Wärmeableitelement festgestellt. Unter anderem ist dies bedingt durch Fertigungstoleranzen.

Dadurch, dass erfindungsgemäß die Akkuzellen zumindest abschnittsweise von einem wärmeleitenden Vergussmaterial umgeben sind, werden diese Nachteile vermieden.

Vorzugsweise wird das wärmeleitende Vergussmaterial in flüssiger Form in den Akkupack eingebracht und anschließend ausgehärtet. Somit sind die Akkuzellen zumindest abschnittsweise vom Vergussmaterial umschlossen und es bilden sich keine Hohlräume zwischen Akkuzellen und dem Gehäuse, wodurch ein vergleichsweise guter Wärmeabtransport zum Gehäuse des Akkupacks realisiert wird. Synergetisch nimmt somit das Vergussmaterial sowohl die Rolle eines Wärmeleitelements zwischen den Akkuzellen als auch zwischen den Akkuzellen und dem Gehäuse ein.

Es hat sich gezeigt, dass bei erfindungsgemäß ausgebildeten Akkupacks, durch die gute Wärmeleitfähigkeit des Vergussmaterials, zum einen die Wärme schnell nach außen abgeführt, zum anderen gleichmäßig innerhalb des Akkupacks verteilt wird. Somit kann das Temperaturniveau im Akkupack vergleichsweise niedrig gehalten werden und alle Akkuzellen haben während des Betriebs nahezu die gleiche Temperatur. Daraus ergibt sich insbesondere der Vorteil, dass eine elektrische Handwerkzeugmaschine, die durch den erfindungsgemäßen Akkupack betrieben wird, nicht mehr aufgrund eines bisher nachteiligen Temperaturlimits der Akkuzellen abgeschaltet werden muss. Somit werden die Akkuzellen auch gleichmäßig thermisch belastet.

Es hat sich als vorteilhaft herausgestellt, wenn das Vergussmaterial eine Wärmeleitfähigkeit von wenigstens 1 W/(m*K) (W pro Meter und Kelvin) aufweist. Die Wärmeleitfähigkeit des Vergussmaterials kann wenigstens 2 W/(m*K) aufweisen. Besonders bevorzugt weist das Vergussmaterial eine Brennbarkeitsklasse V-0 nach UL94 auf.

Das Vergussmaterial kann auf Polyurethan basieren und ist vorzugsweise ein Elastomer. Besonders bevorzugt ist das Vergussmaterial elektrisch isolierend. Der spezifische Widerstand des Vergussmaterial ist nach IEC 60093 vorzugsweise größer als 10 E10 Ω * cm, vorzugsweise größer als 10 E11 Ω * cm.

In einer besonders bevorzugten Ausgestaltung umgibt das Vergussmaterial die Akkuzellen vollständig. Somit ist zum einen der bereits eingangs erwähnte Wärmeabtransport nach außen zum Gehäuse des Akkupacks realisiert. Gleichzeitig ist der Akkupack gegen Schmutz und Feuchtigkeit abgedichtet.

In einer weiteren bevorzugten Ausgestaltung weist der Akkupack einen Zellenhalter auf, der die Akkuzellen innerhalb des Gehäuses hält. Der Zellenhalter bildet vorzugsweise zumindest eine abgegrenzte Vergusskammer, innerhalb derer die Akkuzellen von dem wärmeleitenden Vergussmaterial umgeben sind.

Es hat sich als vorteilhaft herausgestellt, wenn die Vergusskammer oder die Vergusskammern nahe eines thermoelektrischen Hotspots der Akkuzellen oder einer jeweiligen Akkuzelle angeordnet sind.

Besonders bevorzugt sind die Akkuzellen als Lithium-Polymerzellen oder als Lithium-Ionen-Zellen ausgeführt.

Besonders bevorzugt ist das Füllmaterial frei von einem Duroplast. Vorzugsweise ist das Füllmaterial ein Elastomer, sodass mechanische Spannungen innerhalb des Gehäuses des Akkupacks kompensiert werden können. Besonders bevorzugt ist die Leerlaufspannung des Akkupacks auf 60 V Gleichspannung begrenzt.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes bevorzugtes Ausführungsbeispiel eines erfindungsgemäßen Akkupacks;
- Fig. 2: das Ausführungsbeispiel der Fig. 1 in einer Seitenansicht;
- Fig. 3: ein zweites bevorzugtes Ausführungsbeispiel eines erfindungsgemäßen Akkupacks; und
- Fig. 4: ein drittes bevorzugtes Ausführungsbeispiel eines erfindungsgemäßen Akkupacks.

### Ausführungsbeispiele:

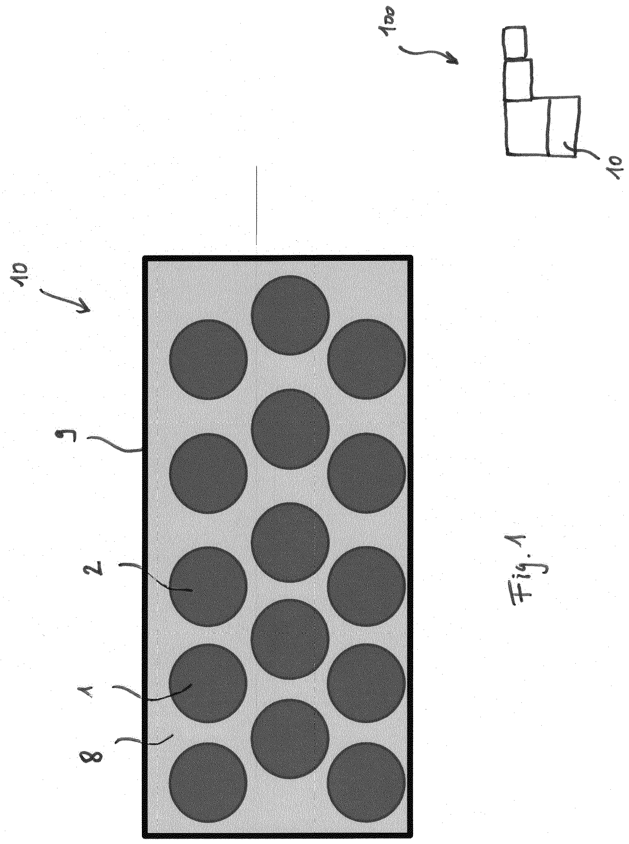

Fig. 1 zeigt einen erfindungsgemäßen Akkupack 10 zur elektrischen Versorgung einer Handwerkzeugmaschine 100, die in Fig. 1 unten rechts schematisch dargestellt ist. Der Akkupack 10 weist ein Gehäuse 9 mit einer Mehrzahl von zylindrischen Akkuzellen 1, 2 auf. Die Akkuzellen 1, 2 sind zwecks Wärmeabfuhr von einem wärmeleitenden Vergussmaterial 8 umgeben.

Im vorliegenden Ausführungsbeispiel weist das Vergussmaterial 8 eine Wärmeleitfähigkeit von etwa 1 W/(m*K) auf und basiert auf Polyurethan.

Beim Ausführungsbeispiel der Fig. 1 ist das Vergussmaterial 8 derart in das Gehäuse 9 eingebracht, dass es die Akkuzellen 1, 2 vollständig umgibt.

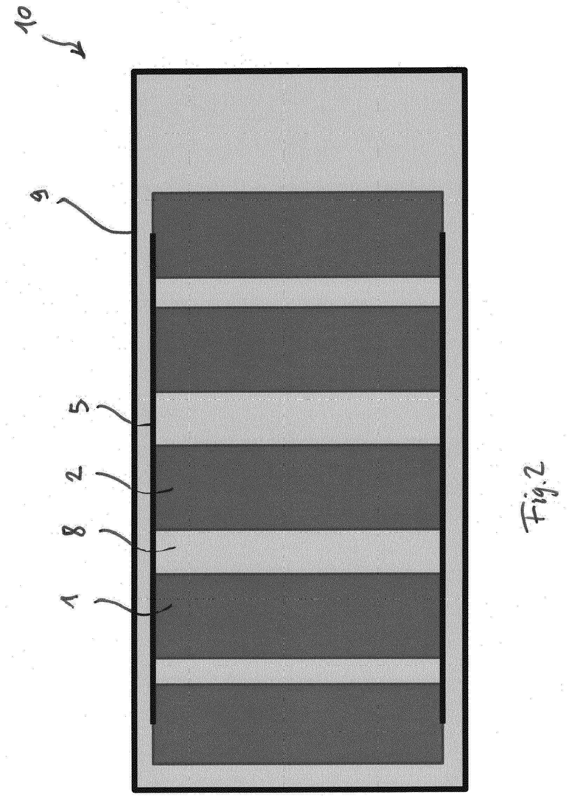

Dies ist besonders gut aus Fig. 2 zu erkennen, welche das Ausführungsbeispiel der Fig. 1 in einer Seitenansicht darstellt. Gut zu erkennen in Fig. 2 sind die zylindrischen Akkuzellen 1, 2, die jeweils über einen Zellverbinder 5 elektrisch miteinander kontaktiert sind.

Der Akkupack 10 der Fig. 2 kann derart hergestellt werden, dass zunächst ein Gehäuse 9 bereitgestellt wird, in dem die Akkuzellen 1, 2 aufgenommen sind. Anschließend wird das Vergussmaterial 8 in flüssiger Form in das Gehäuse 9 eingebracht und anschließend ausgehärtet. Somit sind die hier beispielhaft dargestellten Lithium-Polymerzellen vollständig vom Vergussmaterial 8 umgeben, wobei eine gleichmäßige Wärmeabfuhr realisiert wird.

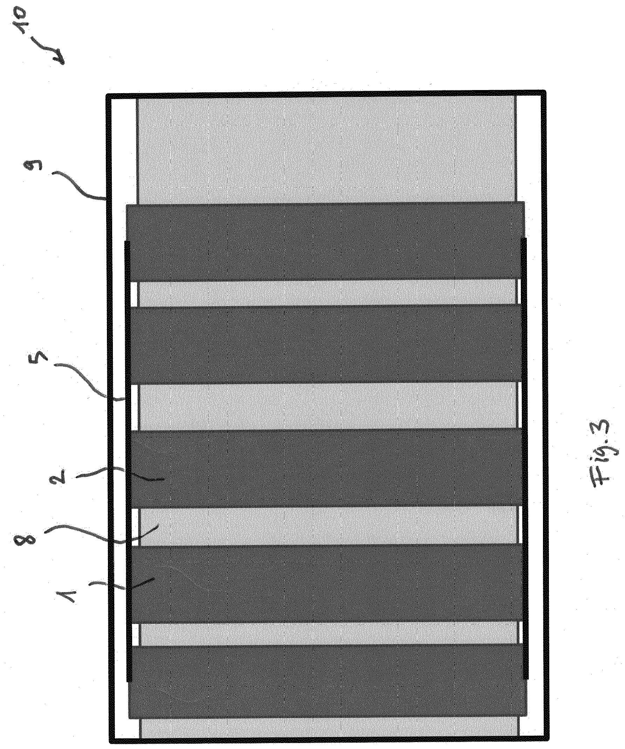

Ein zweites Ausführungsbeispiel eines erfindungsgemäßen Akkupacks 10 ist in Fig. 3 dargestellt. Im Vergleich zu dem Ausführungsbeispiel der Fig. 2 gibt das wärmeleitende Vergussmaterial 8 lediglich abschnittsweise die Akkuzellen 1, 2. Ein überwiegender Teil der Akkuzellen 1, 2 ist, im vorliegend dargestellten Ausführungsbeispiel etwa 90% bezogen auf die Länge der Akkuzellen 1, 2, ist von dem Vergussmaterial umgeben. Im Bereich des Zellverbinders 5, der die Akkuzellen 1, 2 elektrisch kontaktiert, ist das Gehäuse 9 bzw. sind die Akkuzellen 1, 2 frei von Vergussmaterial.

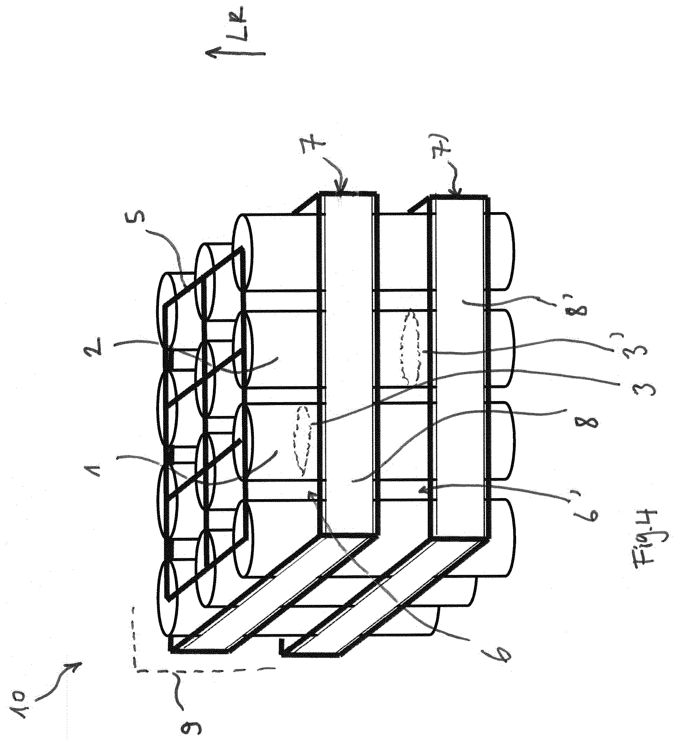

Fig. 4 zeigt schließlich ein drittes Ausführungsbeispiel eines erfindungsgemäßen Akkupacks 10. Hier ist das Gehäuse 9 des Akkupacks 10 lediglich schematisch durch die gestrichelte Linie angedeutet.

Der Akkupack 10 weist insgesamt 12 zylindrische Akkuzellen 1, 2 in Form von Lithium-Ionen-Zellen auf. Die Akkuzellen sind durch den Zellverbinder 5 elektrisch miteinander kontaktiert.

Der Akkupack 10 weist zwei Zellenhalter 7, 7' auf, die ausgebildet und dazu bestimmt sind, die Akkuzellen 1, 2 innerhalb des Gehäuses 9 zu halten. Wie der Fig. 4 entnommen werden kann, bilden die Zellenhalter 7, 7' einen Rahmen im vorzugsweise rechteckigen bzw. quadratischen Rahmen, der die Akkuzellen 1, 2 von außen umschließt.

Gemäß dieses bevorzugten Ausführungsbeispiels bildet jeder der Zellenhalter 7, 7' eine abgegrenzte Vergusskammer 6, 6', innerhalb derer die Akkuzellen 1, 2 von dem wärmeleitenden Vergussmaterial umgeben sind. Werden die Zellenhalter 7, 7' bzw. deren Vergusskammern 6, 6' mit dem Vergussmaterial befüllt, so bilden sich quasi scheibenförmige Wärmeableitelemente. Vorzugsweise weisen die Zellenhalter 7, 7' Durchgangsöffnungen 3, 3' auf, die im Wesentlichen dem äußeren Umfang der Akkuzellen 1, 2 entsprechen. Durch diese Durchgangsöffnungen 3, 3' kann eine jeweilige Akkuzelle 1, 2 in den Zellenhalter 7 eingeschoben werden und schließt gleichzeitig den Zellenhalter 7 zur Umgebung ab. Beim Befüllen des Zellenhalters 7, 7' bzw. der Vergusskammer 6, 6' bilden sich somit scheibenförmige Wärmeleitelemente aus.

Die Vergusskammern 6, 6' sind hierbei nahe der thermoelektrischen Hotspots der Akkuzellen 1, 2 angeordnet, um eine optimale Wärmeabfuhr zu gewährleisten.

Ebenfalls aus Fig. 4 ersichtlich ist, dass in Längsrichtung LR der Akkuzellen 1, 2 beispielhaft genau zwei Zellenhalter 7, 7' ausgebildet sind, die bezogen auf die Längsrichtung LR etwa 50% der Oberfläche der Akkuzellen 1, 2 umgeben.

In einem weiteren, hier nicht dargestellten Ausführungsbeispiel können in Längsrichtung LR vier solcher (in vergossenem Zustand) scheibenförmiger Zellenhalter vorgesehen sein. Vorzugsweise ist in einem solchen Ausführungsbeispiel mit vier Zellenhaltern, jeweils ein Zellenhalter endständig zu den Akkuzellen 1, 2 angeordnet, d.h. im Bereich der oberen Zellverbinder 5 sowie unteren Zellverbinder (5. Zwei weitere Zellenhalter können etwa mittig, bezogen auf die Länge LR, angeordnet sein.

### Bezugszeichenliste

- 1: Akkuzellen
- 2: Akkuzellen
- 3: Durchgangsöffnungen
- 3': Durchgangsöffnungen
- 5: Zellverbinder
- 6: Vergusskammer
- 7: Zellenhalter
- 7': Zellenhalter
- 8: Vergussmaterial
- 8': Vergussmaterial
- 9: Gehäuse
- 10: Akkupack
- 100: Handwerkzeugmaschine

- LR: Längsrichtung

## Patentansprüche

1. Akkupack (10) für eine elektrische Handwerkzeugmaschine (100), wobei der Akkupack (10) ein Gehäuse (9) mit einer Mehrzahl von vorzugsweise zylindrischen Akkuzellen (1, 2) aufweist,
**dadurch gekennzeichnet, dass** die Akkuzellen (1, 2) zwecks Wärmeabfuhr zumindest abschnittweise von einem wärmeleitenden Vergussmaterial (8) umgeben sind.

2. Akkupack (10) nach Anspruch 1,
**dadurch gekennzeichnet, dass** das Vergussmaterial (8) eine Wärmeleitfähigkeit von wenigstens 1 W/(m*K) aufweist.

3. Akkupack (10) nach Anspruch 1 oder 2,
**dadurch gekennzeichnet, dass** das Vergussmaterial (8) die Brennbarkeitsklasse V0 nach UL94 aufweist.

4. Akkupack (10) nach einem der vorangehenden Ansprüche,
**dadurch gekennzeichnet, dass** das Vergussmaterial (8) auf Polyurethan basiert und vorzugsweise ein Elastomer ist.

5. Akkupack (10) nach einem der vorangehenden Ansprüche,
**dadurch gekennzeichnet, dass** das Vergussmaterial (8) die Akkuzellen (1, 2) vollständig umgibt.

6. Akkupack (10) nach einem der Ansprüche 1 bis 4,
**dadurch gekennzeichnet, dass** der Akkupack (10) einen Zellenhalter (7) aufweist, der die Akkuzellen (1, 2) innerhalb des Gehäuses (9) hält, und der zumindest eine abgegrenzte Vergusskammer (6) bildet innerhalb derer die Akkuzellen (1, 2) von dem wärmeleitenden Vergussmaterial (8) umgeben sind.

7. Akkupack (10) nach Anspruch 6,
**dadurch gekennzeichnet, dass** die Vergusskammer (6) oder die Vergusskammern nahe eines thermoelektrischen Hotspots der Akkuzellen (1, 2) oder einer jeweiligen Akkuzelle angeordnet sind.

8. Akkupack (10) nach einem der vorangehenden Ansprüche,
**dadurch gekennzeichnet, dass** die Akkuzellen (1, 2) als Lithium-Ionen-Zellen oder Li-Polymerzellen ausgeführt sind.

9. Akkupack (10) nach einem der vorangehenden Ansprüche,
**dadurch gekennzeichnet, dass** das Füllmaterial (8) frei von einem Duroplast ist.

10. Akkupack (10) nach einem der vorangehenden Ansprüche,
**dadurch gekennzeichnet, dass** die Leerlaufspannung des Akkupacks (10) auf 60 Volt Gleichspannung begrenzt ist.
